Europäisches Patentamt

European Patent Office

Office européen des brevets

(11) Publication number: **0 436 223 A2**

# EUROPEAN PATENT APPLICATION

(21) Application number: 90125604.0

(22) Date of filing: 27.12.90

(51) Int. Cl.5: **G05B 19/10**

(30) Priority: 05.01.90 JP 286/90

(43) Date of publication of application:
10.07.91 Bulletin 91/28

(84) Designated Contracting States:
DE FR GB

(71) Applicant: **PIONEER ELECTRONIC
CORPORATION**
No. 4-1, Meguro 1-chome
Meguro-ku Tokyo 153(JP)

(72) Inventor: **Tsukada, Kazuya, c/o Pioneer
Electronic Corp.**
Ohmori Kojo, 15-5, Ohmori Nishi 4-chome
Ohta-ku, Tokyo 143(JP)
Inventor: **Sugiyama, Shinji,c/o Pioneer
Electronic Corp.**
Ohmori Kojo, 15-5, Ohmori Nishi 4-chome
Ohta-ku, Tokyo 143(JP)

Inventor: **Kawabata, Yoshihiro, c/o Pioneer
Electronic Corp.**
Ohmori Kojo, 15-5, Ohmori Nishi 4-chome
Ohta-ku, Tokyo 143(JP)
Inventor: **Kuroiwa, Takehiko, c/o Pioneer
Electronic Corp.**
Ohmori Kojo, 15-5, Ohmori Nishi 4-chome
Ohta-ku, Tokyo 143(JP)
Inventor: **Arai, Naoyuki, c/o Pioneer Electronic
Corp.**
Ohmori Kojo, 15-5, Ohmori Nishi 4-chome
Ohta-ku, Tokyo 143(JP)
Inventor: **Ishikawa, Kikuo, c/o Pioneer
Electronic Corp.**
Ohmori Kojo, 15-5, Ohmori Nishi 4-chome
Ohta-ku, Tokyo 143(JP)

(74) Representative: **Reinhard, Skuhra, Weise**
Friedrichstrasse 31
W-8000 München 40(DE)

(54) Intelligent timer.

(57) A timer with which a time required for setting is reduced and no error in setting takes place. The timer is provided for an acoustic system which includes several audio sources and comprises timer setting means for effecting setting of a timer program therethrough, functioning condition detecting means for detecting functioning conditions of the audio sources, memory means for storing functioning conditions of a selected one of the audio sources therein, and controlling means for causing the memory means to selectively store therein functioning conditions of a particular one of the audio sources which is in an operative condition when setting of the timer is started by way of the timer setting means as functioning conditions in which the particular one audio source should be upon operation of the timer.

## INTELLIGENT TIMER

## BACKGROUND OF THE INVENTION

### 1. Field of the Invention

This invention relates to an intelligent timer for an audio system in which a tuner, a compact disk player, a laser disk player, a tape deck and so forth are incorporated, and particularly to improvement in setting of such timer.

### 2. Description of the Prior Art

Conventionally, in order to effect setting of a timer for an audio system, it is necessary to set a starting time or on time, an ending time or off time, a function or audio source, a sound volume and so forth successively in a sequence by way of operation of keys in accordance with a timer program. Accordingly, resetting is required if there is an error or a lack in part of a setting sequence.

Since conventional timer setting involves setting of various data or conditions in a sequence as described above, a long period of time is required in order to complete setting of all data. Such operation is cumbersome and an error in setting likely takes place by an error in operation.

## SUMMARY OF THE INVENTION

It is an object of the present invention to provide a timer with which a time required for setting is reduced and no error in setting takes place.

In order to attain the object, according to the present invention, there is provided an intelligent timer for an acoustic system which includes several audio-visual sources, which comprises timer setting means for effecting setting of a timer program, functioning condition detecting means for detecting functioning conditions of the audio sources, and memory means for storing functioning conditions of a particular one of the audio sources which is in an operative condition when setting of the timer is started by way of the timer setting means as functioning conditions in which the particular one audio source should be upon operation of the timer.

With the intelligent timer of the present invention, if, upon setting of the timer, an apparatus serving as an audio source which is to be used upon operation of the timer is first set into functioning conditions in which it should be upon operation of the timer and then only setting of a starting point of time of the timer is executed, then functioning conditions of a particular one of the audio sources which is in an operative condition when setting of the timer is started by way of the timer setting means are automatically stored into the memory means as functioning conditions in which the particular one audio source should be upon operation of the timer. Accordingly, functioning conditions of the audio source upon operation of the timer can be confirmed in advance and, a procedure for setting of the timer is simplified and setting of such functioning conditions is effected in a very short period of time without an error.

The above and other objects, features and advantages of the present invention will become apparent from the following description and the appended claims, taken in conjunction with the accompanying drawings.

## BRIEF DESCRIPTION OF THE DRAWINGS

FIG. 1 is a block diagram of an intelligent timer showing an embodiment of the present invention; and

FIG. 2 is a flow chart illustrating operation of the intelligent timer of FIG. 1.

## DESCRIPTION OF THE PREFERRED EMBODIMENT

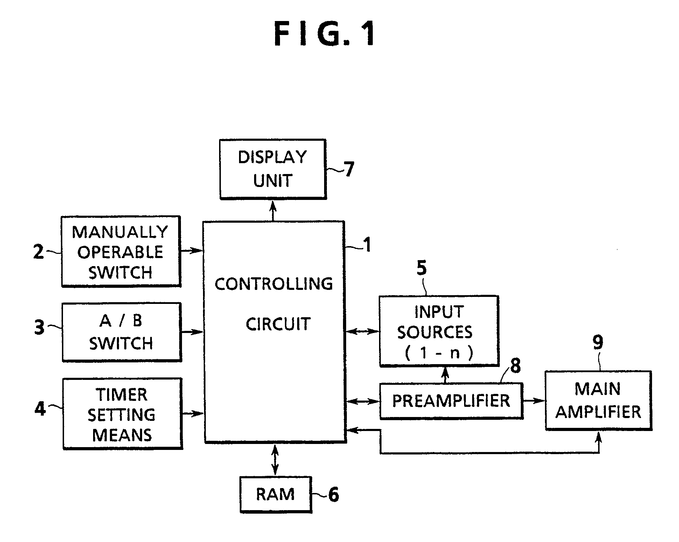

Referring first to FIG. 1, there is shown an intelligent timer to which the present invention is applied. The timer shown includes a controlling circuit 1 which serves as a central processing unit. Various other components are connected to the controlling circuit 1 and include a plurality of manually operable switches 2 for entering operation information by manual operation thereof, an A/B switch 3 for alternatively selecting one of two modes for which contents of timer setting are set in advance, a timer setting means 4 including several manually operable keys not shown for cooperating with the controlling circuit 1 to set a timer program, a plurality of, that is, n, input or audio sources 5 ($5_1$ to $5_n$) which may include a tuner, a compact disk player, a laser disk player, a tape deck and so forth not shown, a random access memory (RAM) or storage medium 6 serving as memory means for storing therein functioning conditions of the audio sources $5_1$ to $5_n$ upon setting of the timer, a display unit 7 for displaying thereon various information including a time, a mode, a channel and so forth, a preamplifier 8 connected to the input sources $5_1$ to $5_n$, and a main amplifier 9 connected to the preamplifier 8.

The controlling circuit 1 receives various information including discrimination information, operation information, condition information and so forth from the manually operable keys 2, A/B switch 3, timer setting means 4, input sources $5_1$ to $5_n$, RAM 6 and preamplifier 8, determines operation of the input sources $5_1$ to $5_n$, RAM 6, display unit 7 and preamplifier 8, and also executes control of inputting/outputting of various information. Functioning condition detecting means for detecting functioning conditions of various input sources is included in the controlling circuit 1.

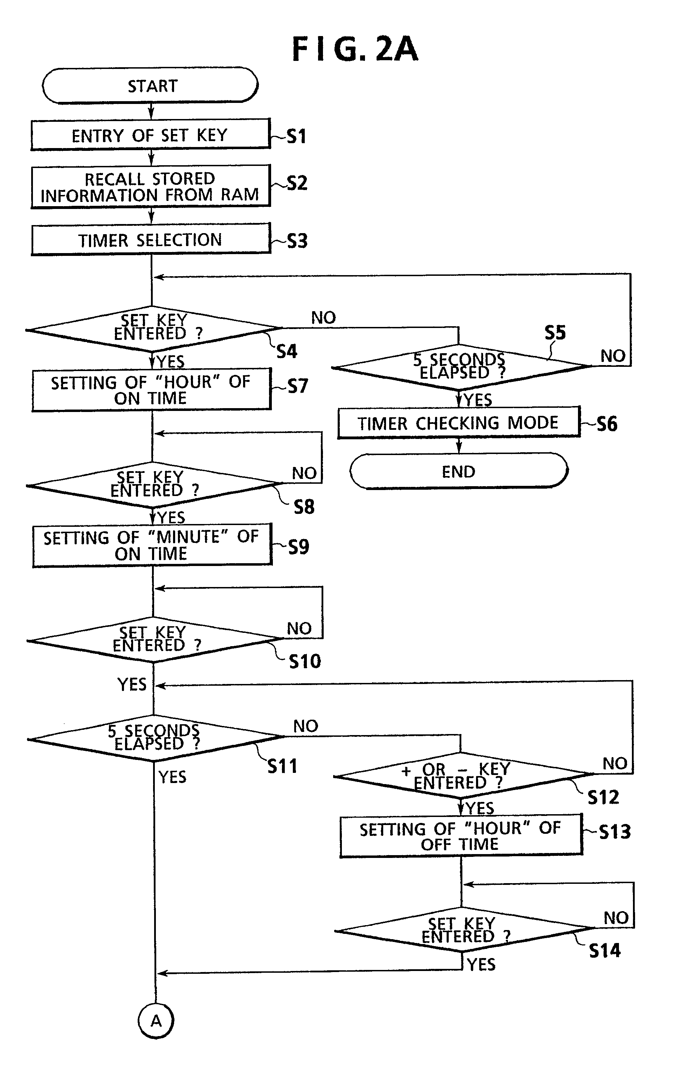

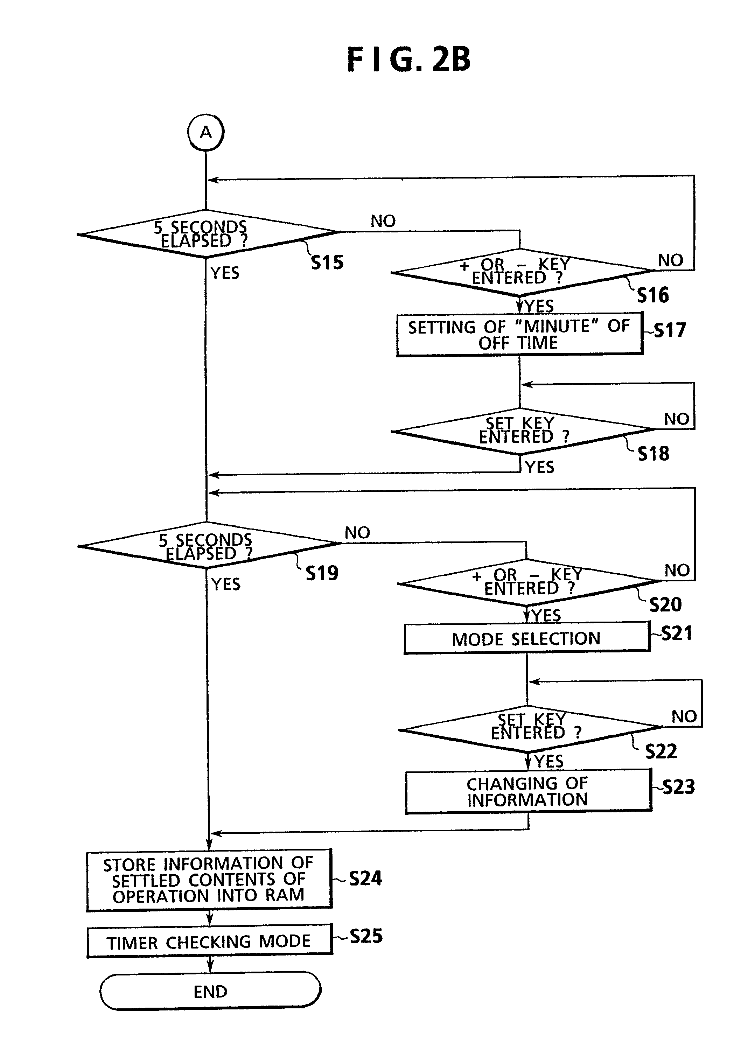

FIG. 2 illustrates operation of the timer, particularly, a flow of operations for setting a wake up time. Before setting of the timer is started in accordance with the flow chart of FIG. 2, one of the input sources $5_1$ to $5_n$ to be used upon operation of the timer is set into functioning conditions in which the source should be upon operation of the timer. At this point of time, a condition of one of the input sources $5_1$ to $5_n$ which is currently in use is displayed on a display window not shown of the display unit 7. In this condition, setting of the timer is performed by way of operation of the timer setting means 4.

Referring to FIG. 2, after the control sequence of the controlling circuit 1 enters the routine shown in FIG. 2, the controlling circuit 1 first waits at step S1 until a SET key not shown of the timer setting means 4 is entered. After the SET key is entered, the controlling circuit 1 recalls from the RAM 6 and temporarily stores into an internal temporary memory area thereof, at step S2, various information which has been detected by the functioning condition detecting means immediately before the present routine is entered and which has been stored in advance from the input sources 5 into the RAM 6 by way of the controlling circuit 1. Such information includes, where the input source is a compact disk player, information of whether the play is a random play or a repeat play, what number piece the piece is, whether the play is a play corresponding to a sub code, whether the display is a remaining time display, and so forth, or where the input source is a tuner, information of whether the broadcasting is FM broadcasting, AM broadcasting or TV broadcasting, what channel the selected station is, whether the input source is in a mute condition or in an automatic blending condition, or where the input source is a television set, information of degrees of colors, tint, brightness and so forth. Also, information which has been detected by the functioning condition detecting means immediately before entry of the present routine and has been stored in advance from the preamplifier 8 and the main amplifier 9 by way of the controlling circuit 1 is recalled from the RAM 6. Such information from the preamplifier 8 includes mode information including information of a sound quality, a surround mode, a sound field effect, a function and so forth while the information from the main amplifier 9 includes information of a sound volume and information of a selected output terminal of the main amplifier 9. After such recalling of information, a timer selecting mode is entered at step S3. After then, entry of the SET key is waited for a fixed period of time, for example, for 5 seconds at steps S4 and S5. In particular, in case the SET key is not entered for 5 seconds, the control sequence advances from step S5 to step S6 to enter a timer checking mode. In the timer checking mode at step S6, various items of set contents of the timer are successively displayed on the display unit 7 each for a fixed period of time, for example, for 5 seconds. After then, the control sequence comes to an end of the present routine.

On the other hand, if the SET key is entered within 5 seconds, the control sequence advances from step S4 to step S7 to enter an "hour" setting mode for a starting time or on time. In the "hour" setting mode at step S7, a display of a numeral on the display unit 7 is successively changed by manual operation of a plus key and/or a minus key of the timer setting means 4. Then, if the SET key is entered at step S8 when a desired "hour" value is displayed on the display unit 7, the value thus displayed is set or settled as the "hour" for a starting time, and subsequently, the control sequence advances to step S9 to enter a "minute" setting mode. A "minute" display is changed by means of the plus key and/or the minus key similarly as in the "hour" setting mode at step S7, and when the SET key is entered at step S10, a numeral displayed on the display unit 7 then is set or settled as the "minute" for a starting time. The starting time, that is, the "hour" and the "minute" for a starting time, are settled in this manner.

After then, an "hour" setting mode for an ending time or off time is entered. In this instant, though not shown as any particular step in FIG. 2, a time obtained by adding a fixed time, for example, one hour, to the starting time is initially set as an ending time. In other words, the time obtained by such addition is stored into a register therefor in the temporary storage area of the controlling circuit 1 and also displayed on the display unit 7.

Then, the controlling circuit 1 waits in this condition, at step S11, for 5 seconds until the plus key or minus key of the timer setting means 4 is entered after the SET key is entered at step S10. If neither the plus key nor the minus key is entered within 5 seconds at steps S11 and S12, setting of an "hour" for an ending time is completed immediately and a "minute" setting mode is entered at step S15. Consequently, the initially set value of the "hour" described above is maintained as the "hour" for an ending time.

On the other hand, in case either the plus key or the minus key is entered within 5 seconds at step S12, the sequence advances to step S13 at which the value of the "hour" for an ending time displayed on the display unit 7 is incremented or decremented each time plus key or the minus key is entered, and then if the SET key is entered at step S14 when a desired value is displayed on the display unit 7, the value is set or settled as the "hour" for an ending time, and the control sequence subsequently enters a "minute" setting mode.

Similarly as in the case of the "hour" setting mode, if neither the plus key nor the minus key is entered within 5 seconds at steps S15 and S16, the "minute" setting mode is completed immediately and the control sequence advances to step S19 to enter an operation selecting mode. Consequently, the initially set value of the "minute" for an ending time is maintained as the "minute" for an ending time.

On the other hand, in case either the plus key or the minus key is entered at step S16 within 5 seconds, the initially set value of the "minute" for an ending time is changed each time the plus key or minus key is entered at step S17, and when the SET key is entered at step S18, the value of the "minute" displayed on the display unit 7 is set or settled as the "minute" for an ending time. The ending time, that is, the "hour" and the "minute" for an ending time, are set or settled in this manner. After then, an operation selecting mode is entered.

In the operation selecting mode, the controlling circuit 1 waits, at step S19, for 5 seconds until either the plus key or the minus key is entered at step S20. If the plus key or minus key is entered within 5 seconds at step S20, then selection of a mode of operation is effected subsequently at step S21. In such selection of a mode, one of the two modes A and B in which the contents described hereinabove are set in advance can be selected, and when the SET key is entered after the mode A or B is selected, that is, after the A/B switch 3 is operated to the A side or B side, the selection is finally settled, that is, the mode A or the mode B is set. Then, information or contents of operation relating to the selected mode A or B are changed accordingly at step S23. Such contents of operation which may be changed at step S23 may include, for example, a function, a sound quality mode, a surround mode and a "volume" position. After then, the control sequence advances to step S24 at which the contents of operation or data thus set in the flow of operation described above including the "hour" and "minute" for a starting time, the "hour" and "minute" for an ending time and the contents of operation obtained at step S23 are stored into the RAM 6.

On the other hand, in case there is no entry of the plus key or the minus key within 5 seconds at step S19, the control sequence directly advance to step S24 at which the contents of operation set in the flow of operations described above are stored into the RAM 6. In this instance, however, since the steps S21 and S23 are bypassed or skipped and the contents of operation in which the selected source has been before starting of the timer setting operation of FIG. 2 are not changed at all, the functioning conditions of the source before starting of the setting of the timer remain as they are, and the functioning conditions are stored into the memory means 6 as selected contents of a mode of operation at step S24.

The control sequence subsequently advances from step S24 to step S25 to enter a timer checking mode. In the timer checking mode at step S25, the finally settled or set contents of operation are successively displayed each for 5 seconds on the display unit 7. After then, the control sequence comes to an end of the present routine.

In this manner, during setting of the timer, after a starting time or an ending time is set, functioning conditions of a source before starting of such setting of the timer can be automatically determined as contents of operation without special operation.

Having now fully described the invention, it will be apparent to one of ordinary skill in the art that many changes and modifications can be made thereto without departing from the spirit and scope of the invention as set forth herein.

## Claims

1. An intelligent timer for an acoustic system which includes several audio sources, comprising timer setting means for effecting setting of a timer program, functioning condition detecting means for detecting functioning conditions of said audio sources, and memory means for storing functioning conditions of a particular one of said audio sources which is in an operative condition when setting of said timer is started by way of said timer setting means as functioning conditions in which the particular one audio source should be upon operation of said timer.

2. An intelligent timer as claimed in claim 1, further comprising display means for displaying thereon a numeral representative of time during setting of said timer started by operation of said timer setting means.

3. An intelligent timer as claimed in claim 2, wherein said timer setting means includes a manually operable numerical value entering member for entering a numerical value therethrough and a manually operable settling member for settling a numerical value entered by way of said numerical value entering means.

4. An intelligent timer for an acoustic system which includes several audio sources, comprising timer setting means for effecting setting of a timer program therethrough, functioning condition detecting means for detecting functioning conditions of said audio sources, memory means for storing functioning conditions of a selected one of said audio sources therein, and controlling means for causing said memory means to selectively store therein functioning conditions of a particular one of said audio sources which is in an operative condition when setting of said timer is started by way of said timer setting means as functioning conditions in which the particular one audio source should be upon operation of said timer.

5. An intelligent timer as claimed in claim 4, further comprising display means for displaying thereon a numeral representative of time during setting of said timer started by operation of said timer setting means.

6. An intelligent timer as claimed in claim 5, wherein said timer setting means includes a manually operable numerical value entering member for entering a numerical value therethrough and a manually operable settling member for settling a numerical value entered by way of said numerical value entering means.

7. An intelligent timer as claimed in claim 5, wherein said controlling means controls said display means to successively display thereon contents of operation settled through setting of said timer after the setting is completed.

8. An intelligent timer for an acoustic system which includes several audio sources, comprising timer setting means for effecting setting of a timer program therethrough, functioning condition detecting means for detecting functioning conditions of said audio sources, memory means for storing functioning conditions of a selected one of said audio sources therein, means for setting functioning conditions in which the selected one audio source should be upon operation of said timer, and controlling means for causing said memory means to store therein functioning conditions set by said functioning condition setting means when such functioning conditions are set during setting of said timer as functioning conditions of the selected one audio source in which the selected one audio source should be upon operation of said timer, but store therein, when functioning conditions are not set by said functioning condition setting means after starting of setting of said timer, functioning conditions of one of said audio sources which is in an operative condition when setting of said timer is started by way of said timer setting means as functioning conditions of the selected one audio source in which the selected one audio source should be upon operation of said timer.

9. An intelligent timer setting mode for effectively setting a timer program, wherein functioning conditions of a particular one of several audio sources which is in an operative condition when setting of said timer is started are first detected and then stored in a memory means, said particular one of several audio sources being programmed together with said functioning conditions so as to be started at a preset time by a timer setting procedure.

10. An intelligent timer setting mode for effectively setting a timer program, wherein functioning conditions of a particular one of several audio sources which is in an operative condition when setting of said timer is started are first detected and then stored in a memory means, characterized in that said functioning conditions can be modified during a timer setting procedure so as for said particular one of several audio sources to be started at a preset time together with said modified conditions.

FIG. 1

# FIG. 2A

START

ENTRY OF SET KEY — S1

RECALL STORED INFORMATION FROM RAM — S2

TIMER SELECTION — S3

SET KEY ENTERED ? — S4 — NO

S5 — 5 SECONDS ELAPSED ? — NO

YES — TIMER CHECKING MODE — S6

END

YES — SETTING OF "HOUR" OF ON TIME — S7

SET KEY ENTERED ? — NO — S8

YES — SETTING OF "MINUTE" OF ON TIME — S9

SET KEY ENTERED ? — NO — S10

YES

5 SECONDS ELAPSED ? — NO — S11

+ OR − KEY ENTERED ? — NO — S12

YES — SETTING OF "HOUR" OF OFF TIME — S13

SET KEY ENTERED ? — NO — S14

YES

YES

A

# FIG. 2B

(A)

5 SECONDS ELAPSED ? — S15 — NO → + OR - KEY ENTERED ? — S16 — NO

↓ YES (S15)

YES (S16) ↓

SETTING OF "MINUTE" OF OFF TIME — S17

↓

SET KEY ENTERED ? — S18 — NO

↓ YES

5 SECONDS ELAPSED ? — S19 — NO → + OR - KEY ENTERED ? — S20 — NO

↓ YES (S19)

YES (S20) ↓

MODE SELECTION — S21

↓

SET KEY ENTERED ? — S22 — NO

↓ YES

CHANGING OF INFORMATION — S23

STORE INFORMATION OF SETTLED CONTENTS OF OPERATION INTO RAM — S24

↓

TIMER CHECKING MODE — S25

↓

( END )